# EUROPEAN PATENT APPLICATION

(11) **EP 4 350 837 A1**
(43) Date of publication of application: **10.04.2024**
(21) Application number: 22871147.9
(22) Date of filing: 05.08.2022
(51) Int. Cl.: H01M 10/42

(54) **BATTERY PACK COOLING SYSTEM CAPABLE OF PREVENTING THERMAL RUNAWAY PROPAGATION OF BATTERY PACK, AND WORKING METHOD OF BATTERY PACK COOLING SYSTEM**

(30) Priority: 02.08.2022 CN 202210918909
(71) Applicant: Nanjing University, Nanjing, Jiangsu 210023 (CN)
(72) Inventor: WANG, Jin, Shanghai 200000 (CN); HUANG, Chongyang, Shanghai 200000 (CN); WU, Dong, Shanghai 200000 (CN); LUO, Yingzhe, Shanghai 200000 (CN); ZHU, Jian, Shanghai 200000 (CN)
(74) Representative: Ipside
(86) International application number: PCT/CN2022/110525
(87) International publication number: WO 2024/026826

(57) **Abstract**

The present application discloses a battery pack cooling system capable of preventing propagation of thermal runaway of a battery pack and a working method thereof. The battery pack cooling system capable of preventing the propagation of the thermal runaway of the battery pack includes at least a cooling fluid guide assembly, at least a refrigeration element, at least a heat exchange element, at least a thermal runaway sensing element, and at least a fluid diversion assembly. The cooling fluid guide assembly includes a plurality of cooling fluid circulation pipelines and at least an electronic water pump. The electronic water pump is configured to be communicatively connected to a controller of a vehicle and is arranged on the cooling fluid circulation pipelines, the refrigeration element communicates with the cooling fluid circulation pipelines, the heat exchange element communicates with the cooling fluid circulation pipelines. The thermal runaway sensing element is configured to be communicatively connected to the controller. The fluid diversion assembly includes at least a fluid guide channel and at least a fluid diversion valve. The fluid diversion valve is set as a multi-way solenoid valve, and has at least two interfaces configured to communicate with the cooling fluid circulation pipelines, and at least one interface communicating with one end of the fluid guide channel.

## Description

### Technical Field

The present invention relates to the technical field of devices for protecting battery packs, in particular to a battery pack cooling system capable of preventing propagation of thermal runaway of a battery pack and a working method thereof. The system is configured to prevent the propagation of the thermal runaway of the battery pack.

### Background of the Invention

With the emphasis on environmental protection, the sales of new energy vehicles have also increased rapidly. As a kind of vehicle that is not very mature, the driving safety of new energy vehicles has received great attention. In addition, in the recent period, spontaneous combustion of batteries, battery explosion and the like reported by various news made people question the safety performance of new energy vehicles to a certain extent.

Therefore, the safety of battery packs in new energy vehicles is one of the main problems to be solved urgently at present. The main problems with the safety performance of new energy vehicles are the spontaneous combustion and explosion of battery packs. Based on the current technical level, the spontaneous combustion and even explosion of battery packs are mainly caused by propagation of thermal runaway of the battery packs. In terms of internal structures of power batteries, the causes of thermal runaway of battery modules include several key factors such as overheating, overcharge, internal short circuit, and collision. Once thermal runaway of battery packs occurs, it will lead to spontaneous combustion of batteries in severe cases. That is to say, when the thermal runaway of the batteries reaches a certain temperature, it will lead to an uncontrollable state, for example, the temperature inside the batteries rises perpendicularly to cause combustion and explosion.

Whether it is the spontaneous combustion or explosion of the batteries due to the thermal runaway, the safety of a driver, passengers, and people and facilities around is greatly threatened. Therefore, when the thermal runaway of the batteries cannot be solved, how to prevent and control the propagation of the thermal runaway of the battery packs is a problem that many technicians need to tackle.

At present, power battery packs of new energy vehicles basically adopt two cooling modes of natural air cooling and liquid cooling. The liquid cooling mode has the advantages of higher cooling rate, better safety performance and the like, and therefore is favored by most manufacturers. The liquid cooling technology is mainly based on a thermal management liquid cooling system of a new energy vehicle that is provided with an electronic water pump, an expansion kettle, a coolant circulation pipeline, a coolant, a heat exchanger, a water cooling plate, and other components. Flow power is provided by the electronic water pump, a cold source is provided by the heat exchanger, and the coolant is filled and compensated by the expansion kettle. The coolant flows continuously in the coolant circulation pipeline to provide the continuous cold source for the water cooling plate, so as to cool a battery module in a battery pack. The electronic water pump is powered by on-board batteries of the new energy vehicle. The water cooling plate is arranged in the battery pack and attached to the surface of the battery pack.

Whether it is the natural air cooling or the liquid cooling, the cooling service is provided to a certain extent only when the battery pack works. Once thermal runaway of the battery pack occurs, effects of the two cooling modes may be almost ignored, resulting in frequent spontaneous combustion and explosion of the batteries at present.

In the prior art, there are also some ways to quickly cool battery packs in a manner of liquid spraying in the event of thermal runaway of the battery packs. However, such manner requires great changes to the overall structure of existing battery packs due to the addition of new liquid pipelines and assemblies independent of a coolant for the battery packs. At the beginning, automobile manufacturers have already predetermined the positions of a battery pack and various pipelines in the battery pack. If more pipelines are added to the battery pack, the structure of the battery pack will undergo great changes, which will inevitably lead to changes in structural design of a whole vehicle. Therefore, it certainly will lead to a sharp increase in manufacturing costs.

### Summary of the Invention

One advantage of the present invention is to provide a battery pack cooling system capable of preventing propagation of thermal runaway of a battery pack and a working method thereof. When a thermal runaway sensing element senses the thermal runaway of the battery pack, a cooling fluid that provides a cooling service in the prior art is rapidly sprayed on a battery module in the battery pack by controlling a fluid diversion valve, so that the propagation of the thermal runaway of the battery pack can be effectively controlled, thereby providing sufficient escape time for a driver, passengers, and people around.

One advantage of the present invention is to provide a battery pack cooling system capable of preventing propagation of thermal runaway of a battery pack and a working method thereof, where the control on the propagation of the thermal runaway of the battery pack may be implemented only by adding a fluid diversion assembly and a thermal runaway sensing element on the basis of an original cooling system, so that the structure is simple, the cost is low, and the modification is convenient.

One advantage of the present invention is to provide a battery pack cooling system capable of preventing propagation of thermal runaway of a battery pack and a working method thereof. A normal cooling service of a cooling fluid is provided when the battery pack works. Only when a thermal runaway sensing element monitors the thermal runaway of the battery pack, a flow direction of the cooling fluid in the fluid diversion valve is automatically switched without affecting normal operation of a whole vehicle at ordinary times.

One advantage of the present invention is to provide a battery pack cooling system capable of preventing propagation of thermal runaway of a battery pack and a working method thereof. Spray heads are distributed in different positions of the battery pack to simultaneously provide cooling spray for a battery module during the thermal runaway, which can further improve the efficiency of controlling the propagation of the thermal runaway.

One advantage of the present invention is to provide a battery pack cooling system capable of preventing propagation of thermal runaway of a battery pack and a working method thereof. A plurality of spray holes are arranged, which can effectively increase the area of spraying a cooling fluid, thereby further improving the efficiency of controlling the propagation of the thermal runaway.

One advantage of the present invention is to provide a battery pack cooling system capable of preventing propagation of thermal runaway of a battery pack and a working method thereof. A part of spray heads are arranged over a battery module, so that a cooling fluid can be sprayed on a surface of the battery pack more rapidly by using the falling gravity of the cooling fluid.

One advantage of the present invention is to provide a battery pack cooling system capable of preventing propagation of thermal runaway of a battery pack and a working method thereof. An alarm device is arranged, so that a driver, passengers, and people around can be timely reminded to keep away from the battery pack when the thermal runaway of the battery pack occurs, thereby minimizing the personal injury to the driver, the passengers, and people around.

To achieve at least one of the above advantages of the present invention, the present invention provides a battery pack cooling system capable of preventing propagation of thermal runaway of a battery pack, the system being configured to prevent propagation of thermal runaway of a battery pack mounted in an accommodating space of a box body on a vehicle, where the battery pack cooling system capable of preventing the propagation of the thermal runaway of the battery pack includes:
at least a cooling fluid guide assembly, where the cooling fluid guide assembly includes a plurality of cooling fluid circulation pipelines and at least an electronic water pump, and the electronic water pump is configured to be communicatively connected to a controller of the vehicle and is arranged on the cooling fluid circulation pipelines;
at least a refrigeration element, where the refrigeration element communicates with the cooling fluid circulation pipelines, to cool the battery pack located in the accommodating space;
at least a heat exchange element, where the heat exchange element communicates with the cooling fluid circulation pipelines;
at least a thermal runaway sensing element, where the thermal runaway sensing element is configured to detect whether the battery pack located in the accommodating space is in a thermal runaway state, and to be communicatively connected to the controller; and
at least a fluid diversion assembly, where the fluid diversion assembly includes at least a fluid guide channel and at least a fluid diversion valve, the fluid diversion valve is set as a multi-way solenoid valve, and has at least two interfaces configured to communicate with the cooling fluid circulation pipelines, and at least one interface communicating with one end of the fluid guide channel, and the other end of the fluid guide channel is arranged in the box body in a manner of being capable of communicating with the accommodating space when the thermal runaway sensing element detects whether the battery pack is in the thermal runaway state.

According to an embodiment of the present invention, the fluid guide channel forms at least a liquid outlet, and is configured to communicate with the accommodating space.

According to an embodiment of the present invention, at least a spray head is arranged at the other end of the fluid guide channel, is configured to be accommodated in the accommodating space, and has fine and dense spray holes defined as the liquid outlets.

According to an embodiment of the present invention, the fluid guide channel is formed from a high-temperature meltable pipe body, is configured to be transversely arranged at a top of the box body that forms the accommodating space, and has one end communicating with one of the interfaces of the fluid diversion valve, and the other end blocked.

According to an embodiment of the present invention, the fluid guide channel has one end communicating with the fluid diversion valve, and the other end configured to communicate with at least a fluid filling space separated from the accommodating space and formed at a top of the box body.

According to an embodiment of the present invention, the battery pack cooling system capable of preventing the propagation of the thermal runaway of the battery pack further includes an alarm device, where the alarm device is communicatively connected to the thermal runaway sensing element.

To achieve at least one of the above advantages, according to another aspect of the present invention, the present invention provides a battery pack cooling system capable of preventing propagation of thermal runaway of a battery pack, including:
at least a battery pack, where the battery pack includes a box body and at least a battery module, the box body forms an accommodating space, and the battery module is received in the accommodating space;
a controller;
at least a cooling fluid guide assembly, where the cooling fluid guide assembly includes a plurality of cooling fluid circulation pipelines and at least an electronic water pump, and the electronic water pump is communicatively connected to the controller and is arranged on the cooling fluid circulation pipelines;
at least a refrigeration element, where the refrigeration element communicates with the cooling fluid circulation pipelines, to cool the battery pack located in the accommodating space;
at least a heat exchange element, where the heat exchange element communicates with the cooling fluid circulation pipelines;
at least a thermal runaway sensing element, where the thermal runaway sensing element is configured to detect whether the battery pack located in the accommodating space is in a thermal runaway state, and is communicatively connected to the controller; and
at least a fluid diversion assembly, where the fluid diversion assembly includes at least a fluid guide channel and at least a fluid diversion valve, the fluid diversion valve is set as a multi-way solenoid valve, and has at least two interfaces configured to communicate with the cooling fluid circulation pipelines, and at least one interface communicating with one end of the fluid guide channel, and the other end of the fluid guide channel is arranged in the box body in a manner of being capable of communicating with the accommodating space when the thermal runaway sensing element detects whether the battery pack is in the thermal runaway state.

According to an embodiment of the present invention, the fluid guide channel is formed from a high-temperature meltable pipe body, is transversely arranged at a top of the box body that forms the accommodating space, and has one end communicating with one of the interfaces of the fluid diversion valve, and the other end blocked.

According to an embodiment of the present invention, the fluid guide channel has one end communicating with the fluid diversion valve, and the other end communicating with at least a fluid filling space separated from the accommodating space and formed at a top of the box body.

To achieve at least one of the above advantages, the present invention provides a vehicle, including any one of the above battery pack cooling systems capable of preventing propagation of thermal runaway of a battery pack.

According to an embodiment of the present invention, the liquid outlet is located in the accommodating space, and is kept at a top of the box body.

### Brief description of the Drawings

FIG. 1 shows a schematic diagram of a first embodiment of a battery pack cooling system capable of preventing propagation of thermal runaway of a battery pack according to the present invention.
FIG. 2 shows a schematic diagram of a second embodiment of the battery pack cooling system capable of preventing propagation of thermal runaway of a battery pack according to the present invention.
FIG. 3 shows a schematic diagram of the second embodiment of the battery pack cooling system capable of preventing propagation of thermal runaway of a battery pack according to the present invention during thermal runaway.
FIG. 4 shows a schematic enlarged view of a portion A in the second embodiment of the battery pack cooling system capable of preventing propagation of thermal runaway of a battery pack according to the present invention.
FIG. 5 shows a schematic diagram of a third embodiment of the battery pack cooling system capable of preventing propagation of thermal runaway of a battery pack according to the present invention.
FIG. 6 shows a schematic enlarged view of a portion B in the third embodiment of the battery pack cooling system capable of preventing propagation of thermal runaway of a battery pack according to the present invention.

### Detailed Description of Embodiments

The description below serves to disclose the present invention to enable those skilled in the art to implement the present invention. The preferred embodiments in the description below are taken as examples only, and other obvious modifications may occur to those skilled in the art. The basic principle of the present invention defined in the description below may be applied to other implementation solutions, variation solutions, improvement solutions, equivalent solutions, and other technical solutions without departing from the spirit and scope of the present invention.

It should be understood by those skilled in the art that in the disclosure of the specification, the orientational or positional relationships indicated by the terms "longitudinal", "transverse", "upper", "lower", "front", "rear", "left", "right", "vertical", "horizontal", "top", "bottom", "inside", "outside", etc. are based on the orientational or positional relationships shown in the accompanying drawings, and are only for the convenience of describing the present invention and simplifying the description, rather than indicating or implying that the device or element referred to must have a specific orientation or be constructed and operated in a specific orientation. Therefore, the above terms cannot be understood as a limitation to the present invention.

It is understandable that the term "a" should be understood as "at least a" or "one or more", that is, there may be one element in one embodiment or a plurality of elements in another embodiment, and the term "a" cannot be understood as a limitation to the number.

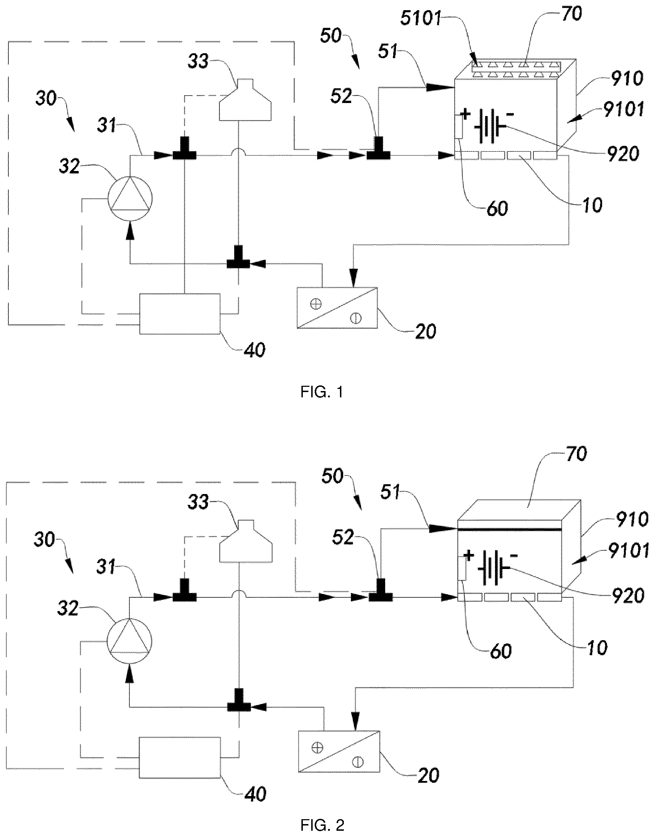

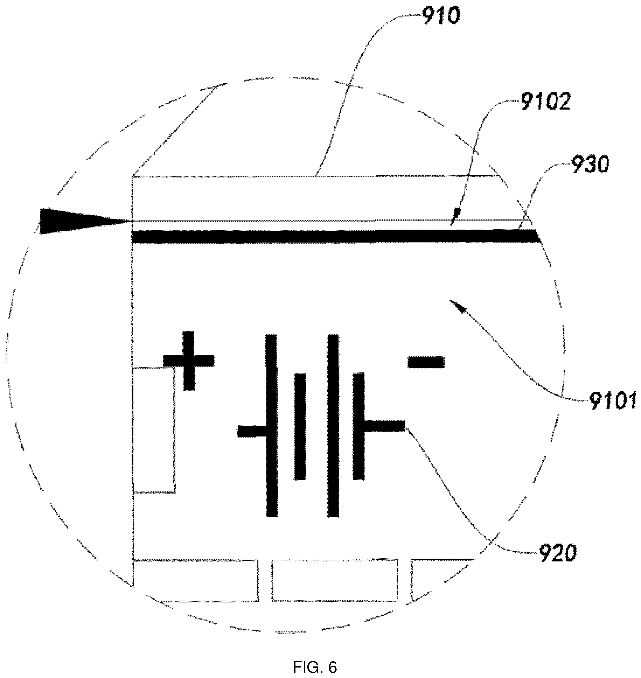

Referring to FIG. 1 and FIG. 6, a battery pack cooling system capable of preventing propagation of thermal runaway of a battery pack according to a preferred embodiment of the present invention will be described in detail below, where the battery pack cooling system capable of preventing the propagation of the thermal runaway of the battery pack can, compared with a conventional cooling system, better prevent the propagation of the thermal runaway of a battery module 920 in the battery pack, such as smoke and the like caused by spontaneous combustion of batteries, battery explosion, and thermal runaway. As is well known, the battery module 920 is arranged in a box body 910 of the battery pack. Particularly, the battery pack cooling system capable of preventing the propagation of the thermal runaway of the battery pack can be configured to cool the battery pack on a vehicle such as a car, and an existing battery pack cooling system has a little change in structure, resulting in low manufacturing costs.

Specifically, the battery pack cooling system capable of preventing the propagation of the thermal runaway of the battery pack includes at least a refrigeration element 10, at least a heat exchange element 20, and a cooling fluid guide assembly 30.

The cooling fluid guide assembly 30 includes a plurality of cooling fluid circulation pipelines 31 and at least an electronic water pump 32. The electronic water pump 32 is controllably communicatively connected to a controller 40 and is arranged on the cooling fluid circulation pipelines 31, to provide power for circulating flow of a cooling fluid in the cooling fluid circulation pipelines 31. The refrigeration element 10 and the heat exchange element 20 communicate with the cooling fluid circulation pipelines 31 in a thermally exchangeable manner, to continuously cool the cooling fluid in the cooling fluid circulation pipelines 31.

Those skilled in the art can understand that the controller 40 is set as an on-board controller, such as a controller with a battery management system (BMS).

The box body 910 of the existing battery pack forms an accommodating space 9101 for accommodating the battery module 920. The refrigeration element 10 is arranged outside the battery module 920 to be located in the accommodating space 9101 of the box body 910, and may exchange heat with the battery module 920 to continuously cool the battery module 920 when the thermal runaway of the battery module 920 does not occur, so as to ensure normal operation of the battery module 920. Those skilled in the art can understand that the refrigeration element 10 may be set as a water cooling plate or other common cooling element.

In one embodiment, at least a cooling fluid circulation pipeline 31 extends into the accommodating space 9101 to communicate with the refrigeration element 10.

Preferably, the cooling fluid guide assembly 30 further includes an expansion kettle 33. The expansion kettle 33 is set to communicate with the cooling fluid circulation pipelines 31, so that the cooling fluid lost can be filled or compensated by the expansion kettle 33, thereby providing continuous cold energy to the refrigeration element 10.

The heat exchange element 20 is arranged on the cooling fluid circulation pipelines 31, and is set to be capable of exchanging heat with the cooling fluid in the cooling fluid circulation pipelines 31 to take away heat of the cooling fluid in the cooling fluid circulation pipelines 31, so as to cool the cooling fluid in the cooling fluid circulation pipelines 31. In this way, the cooling fluid in the cooling fluid circulation pipe 31 may be continuously guided into the refrigeration element 10 to cool the battery module 920, that is to say, the heat exchange element 20 may ensure that the cooling fluid in the cooling fluid circulation pipeline 31 is always a cold fluid.

Those skilled in the art may also understand that the cooling fluid may be set as a fluid with the higher heat exchange efficiency, such as water.

Further, the battery pack cooling system capable of preventing the propagation of the thermal runaway of the battery pack includes at least a fluid diversion assembly 50 and at least a thermal runaway sensing element 60.

The fluid diversion assembly 50 includes at least a fluid guide channel 51 and at least a fluid diversion valve 52, where the fluid diversion valve 52 and the thermal runaway sensing element 60 are communicatively connected to the controller 40.

The thermal runaway sensing element 60 is arranged in the box 910. Preferably, the thermal runaway sensing element 60 is arranged in the accommodating space 9101 and configured to monitor whether thermal runaway of the battery module 920 located in the accommodating space 9101 occurs. The thermal runaway sensing element 60 is set to be selected from one or more of a temperature sensor, a gas sensor, and a flame sensor, so that the temperature in the battery pack is monitored in real time by the temperature sensor, a smoke in the battery pack is monitored in real time by the gas sensor, or whether open fire occurs in the battery pack is monitored in real time by the flame sensor. In general, to ensure the universality of the device and the comprehensiveness of monitoring, as a preference, the thermal runaway sensing element includes all of the temperature sensor, the gas sensor, and the flame sensor.

One end of the fluid guide channel 51 communicates with the fluid diversion valve 52, where the fluid diversion valve 52 is arranged on the cooling fluid circulation pipelines 31.

Referring to FIG. 1, in one embodiment, at least a liquid outlet 5101 communicating with the fluid guide channel 51 and the accommodating space 9101 is formed at the other end of the fluid guide channel 51, so that when the thermal runaway sensing element 60 monitors that the thermal runaway of the battery module 920 occurs, and the fluid diversion valve 52 is controlled by the controller 40 to communicate with the fluid guide channel 51 and the cooling fluid circulation pipelines 31, the cooling fluid in the cooling fluid circulation pipelines 31 can be guided into the accommodating space 9101 through the liquid outlet 5101. It is understandable that since the cooling fluid is guided into the accommodating space 9101, the cooling fluid will be poured into the battery module 920, so that the battery module 920 can be rapidly cooled, thereby avoiding dangerous accidents caused by the thermal runaway of the battery module 920.

Those skilled in the art can understand that in this embodiment, the fluid diversion assembly 50 and the thermal runaway sensing element 60 are only added to an original battery pack cooling system, and no parallel liquid pipelines independent of the cooling fluid in the battery pack are added, so that the changes to pipelines in the battery pack cooling system can be greatly reduced.

In addition, the electronic water pump 32 in a conventional cooling system is powered by a 12V lithium battery, and it is difficult for the 12V lithium battery to drive the cooling fluid to quickly flow to the liquid outlets 5101 with a larger diameter. Therefore, the liquid outlets 5101 are set as fine and dense spray holes with a smaller diameter. A plurality of fine and dense spray holes communicating with the fluid guide channel 51 are formed in the other end of the fluid guide channel 51. In this way, the conventional electronic water pump 32 only needs to provide a lower pressure to quickly spray the cooling fluid in the cooling fluid circulation pipeline 31 from the fine and dense spray holes, thereby preventing the fluid in the cooling fluid circulation pipeline 31 from flowing out of the liquid outlet 5101 in a delayed manner. In other words, if the liquid outlets 5101 are not set as the fine and dense spray holes with the smaller diameter, it is difficult for the conventional electronic water pump 32 to drive the cooling fluid to directly reach a surface of the battery module 920 through the liquid outlets 5101, but only to drive the cooling fluid to slowly flow along an inner wall of the box body 910 to the accommodating space 9101 and fill the accommodating space 9101 from bottom to top, so that there is a certain delay in cooling and fire extinguishing.

Further, a spray head 70 is arranged at the other end of the fluid guide channel 51, where the spray head 70 is preferably arranged in the accommodating space 9101 and located at a top of the box body 910, so that the cooling fluid flowing out of the spray head 70 can be sprayed on the battery module 920 with the thermal runaway from top to bottom. In this way, even if the thermal runaway of the battery module 920 propagates, for example, a fire breaks out, the open fire of the battery module 920 can be timely extinguished.

The spray head 70 has a spray chamber and a plurality of fine and dense spray holes communicating with the spray chamber. Preferably, the fluid guide channel 51 communicates with a plurality of spray heads 70 arranged along a transverse direction, where the spray heads 70 are all arranged in the accommodating space 9101 and located at the top of the box body 910. In this way, it is possible to cover the whole battery module 920 with a spray range of the spray heads 70. As a deformation, the fluid guide channel 51 includes a main channel and at least two branch channels communicating with the main channel, where an end of each of the branch channels is butted with one of the spray heads 70.

More preferably, the spray heads 70 may also be arranged in the accommodating space 9101 and located on a side wall of the box body 910.

Those skilled in the art can understand that the fluid diversion valve 52 may be set as a multi-way solenoid valve, such as a three-way solenoid valve, a four-way solenoid valve, or a five-way solenoid valve. The fluid diversion valve 52 has at least two interfaces configured to communicate with the cooling fluid circulation pipelines 31, and the remaining interfaces communicating with one ends of the fluid guide channels 51. When there is one remaining interface, one of the fluid guide channels 51 may be connected, and when there are two or more remaining interfaces, two or more of the fluid guide channels 51 may be connected. When two or more of the fluid guide channels 51 are arranged, the other end of each of the fluid guide channels 51 may extend into the accommodating space 9101.

Referring to FIG. 2 to FIG. 4, in one modified embodiment, the fluid guide channel 51 extends to the accommodating space 9101 and is transversely arranged at the top of the box 910 that forms the accommodating space 9101, and the fluid guide channel 51 does not form the liquid outlet 5101. That is to say, the fluid guide channel 51 does not communicate with the accommodating space 9101. In other words, the fluid guide channel 51 has one end connected to the fluid diversion valve 52, and the other end blocked.

In one embodiment, the fluid guide channel 51 is formed from a high-temperature meltable pipe body. Once the thermal runaway of the battery module 920 occurs, the controller 40 controls the cooling fluid to quickly fill up the fluid guide channel 51 in advance by receiving a detection signal formed by the thermal runaway sensing element 60.

Those skilled in the art can understand that in this embodiment, the other end of the fluid guide channel 51 is blocked and does not communicate with the accommodating space 9101, so that the low-power electronic water pump 32 powered by the 12V lithium battery can make the cooling fluid quickly fill up the fluid guide channel 51; and part of the fluid guide channel 51 is transversely arranged at the top of the box body 910 that forms the accommodating space 9101, so that the fluid guide channel 51 transversely arranged at the top of the box body 910 that forms the accommodating space 9101 will be hotly melted by the battery module 920 that is combusted due to the thermal runaway, to communicate with the accommodating space 9101, thereby enabling the cooling fluid that fills up the fluid guide channel 51 in advance to be massively poured onto the battery module 920 with the thermal runaway once from top to bottom.

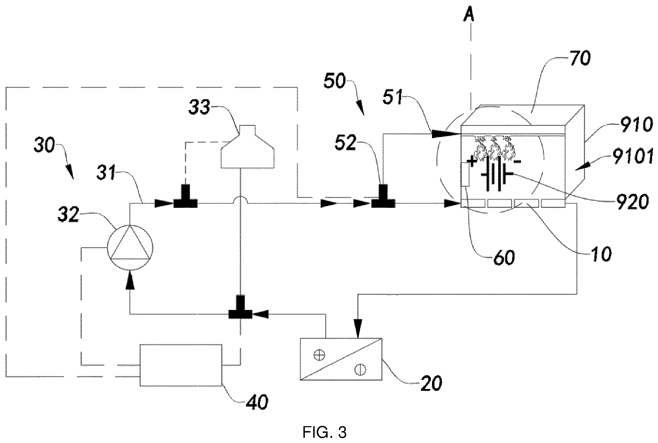

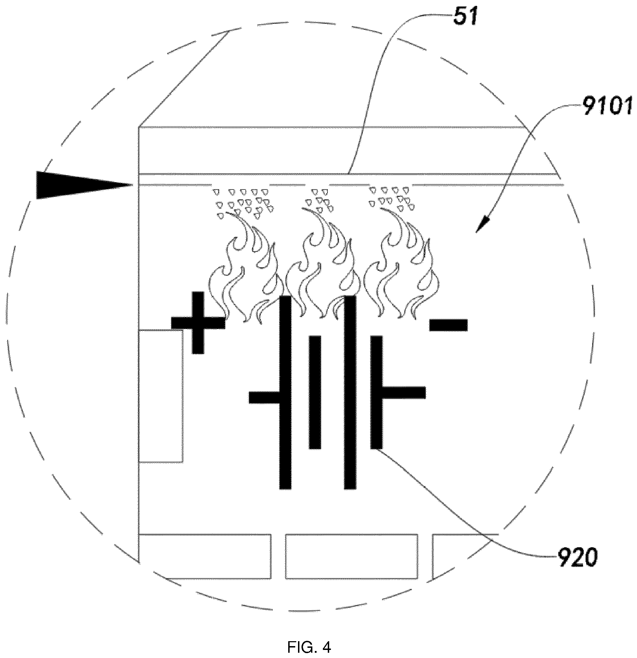

Referring to FIG. 3 and FIG. 4, those skilled in the art can understand that the cooling fluid has a lower temperature through heat exchange with the heat exchange element 20, so that when the cooling fluid is poured onto the battery module 920 with the thermal runaway from top to bottom, the temperature of the battery module 920 can be instantly reduced; and especially a large amount of the cooling fluid fills up the fluid guide channel 51 in advance, so that even if the open fire occurs in the battery module 920, the cooling fluid can instantly extinguish the open fire and rapidly cool the battery module 920. In this way, the battery module 920 will not be exploded due to the thermal runaway.

Preferably, the fluid guide channel 51 is arranged at the top of the box body 910 that forms the accommodating space 9101, so that in the event of the thermal runaway of the battery module 920, the pouring area of the fluid guide channel 51 can be larger, and the amount of the cooling fluid that fills up the fluid guide channel 5101 is also larger, thereby enabling the amount of the cooling fluid subsequently poured onto the battery module 920 with the thermal runaway to be greater.

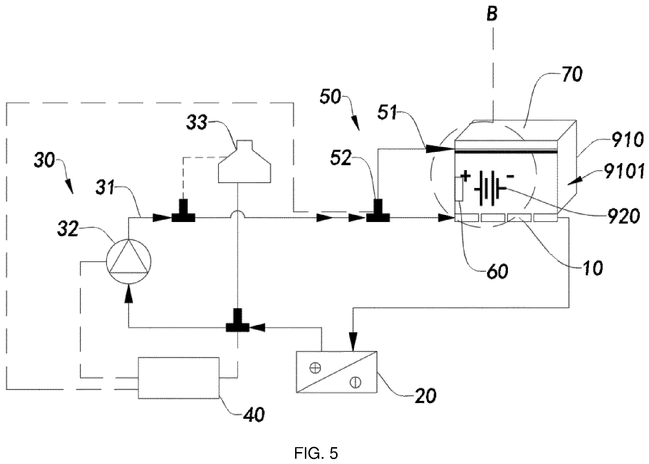

Referring to FIG. 5 and FIG. 6, as a deformation, at least a fluid filling space 9102 separated from the accommodating space 9101 is formed in the top of the box body 910. The fluid guide channel 51 has one end communicating with the fluid diversion valve 52, and the other end communicating with the fluid filling space 9102. That is to say, a separation layer 930 is formed between the fluid filling space 9102 and the accommodating space 9101 and is located at the top of the box body 910, where a thickness of the separation layer 930 is set to be suitable for melting at a predetermined temperature, so that a gap in communication with the accommodating space 9101 and the fluid filling space 9102 is formed after melting.

Therefore, when the thermal runaway of the battery module 920 occurs in the accommodating space 9101, the separation layer 930 will be hotly melted by the battery module 920 that is combusted due to the thermal runaway, so that the cooling fluid can quickly extinguish the battery module 920 with the thermal runaway and quickly cool the battery module 920.

Those skilled in the art can understand that one end of the fluid guide channel 51 is blocked in this embodiment, so that as long as the battery module 920 operates normally, the cooling fluid located in the fluid guide channel 51 will never flow into the accommodating space 9101 from the fluid guide channel 51. In other words, with such a design, even if the fluid diversion valve 52 mistakenly guides the cooling fluid into the fluid guide channel 51 due to a fault, because the fluid guide channel 51 and the accommodating space 9101 are independent of each other in normal operation of the battery module 920, the cooling fluid will not flow into the accommodating space 9101, thereby effectively preventing the battery module 920 from being short-circuited due to the fault of the fluid diversion valve 52.

The battery pack cooling system capable of preventing the propagation of the thermal runaway of the battery pack further includes an alarm device, where the alarm device is communicatively connected to the thermal runaway sensing element 60, and when the thermal runaway sensing element 60 detects that the thermal runaway of the battery module 920 occurs, the alarm device will form a corresponding alarm prompt. The alarm device is preferably implemented as a sound alarm device and/or a light alarm device, such as a buzzer and an alarm light, so that an alarm is given by a sound, light, or combination of the sound and the light, to timely remind a driver, passengers, and other people around to keep away from a new energy vehicle as soon as possible. Therefore, when the thermal runaway of the battery pack occurs, the propagation of the thermal runaway can be effectively prevented, and the alarm can be given in time. Such double-safety measure can minimize the casualties caused by the thermal runaway of the battery pack.

According to another aspect of the present invention, the present invention further provides a working method of a battery pack cooling system capable of preventing propagation of thermal runaway of a battery pack, including the following steps:
S1001: monitoring, by the thermal runaway sensing element 60 arranged in the accommodating space 9101 of the box body 910, whether the battery module located in the accommodating space 9101 is in a thermal runaway state; and
S1002: when the battery module is in the thermal runaway state, controlling the fluid diversion valve 52 arranged on the cooling fluid circulation pipelines 31 to connect the cooling fluid circulation pipelines 31 and the fluid guide channel 51 communicating with the fluid diversion valve 52, to guide the cooling fluid located in the cooling fluid circulation pipelines 31 to flow through the fluid guide channel 51 to the accommodating space 9101, so as to pour the cooling fluid onto the battery module 920 located in the accommodating space 9101.

In one embodiment, the step S1002 includes the following steps:
S10021: when the battery module is in the thermal runaway state, connecting the cooling fluid circulation pipeline 31 and the fluid guide channel 51 communicating with the fluid diversion valve 52 in advance, where the fluid guide channel 51 does not communicate with the accommodating space 9101; and
S10022: after a predetermined time of thermal runaway, until a portion between the fluid guide channel 51 and the accommodating space 9101 is hotly melted due to the thermal runaway, connecting the fluid guide channel 51 and the accommodating space 9101, to cause the cooling fluid that fills up the fluid guide channel 51 in advance to be poured onto the battery module 920 with the thermal runaway.

According to another aspect of the present invention, the present invention further provides a vehicle including the above battery pack cooling system capable of preventing propagation of thermal runaway of a battery pack.

It should be understood by those skilled in the art that the embodiments of the present invention shown in the above description and the accompanying drawings are only examples and do not limit the present invention. The advantages of the present invention have been fully and effectively achieved. The implementation of the present invention may be subject to any variation or modification without departing from the functional and structural principles of the present invention that have been shown and described in the embodiments.

## Claims

1. A battery pack cooling system capable of preventing propagation of thermal runaway of a battery pack, the system being configured to prevent propagation of thermal runaway of a battery pack mounted in an accommodating space of a box body on a vehicle, wherein the battery pack cooling system capable of preventing the propagation of the thermal runaway of the battery pack comprises:
at least a cooling fluid guide assembly, where the cooling fluid guide assembly includes a plurality of cooling fluid circulation pipelines and at least an electronic water pump, and the electronic water pump is configured to be communicatively connected to a controller of the vehicle and is arranged on the cooling fluid circulation pipelines;
at least a refrigeration element, where the refrigeration element communicates with the cooling fluid circulation pipelines, to cool the battery pack located in the accommodating space;
at least a heat exchange element, where the heat exchange element communicates with the cooling fluid circulation pipelines;
at least a thermal runaway sensing element, wherein the thermal runaway sensing element is configured to detect whether the battery pack located in the accommodating space is in a thermal runaway state, and to be communicatively connected to the controller; and
at least a fluid diversion assembly, wherein the fluid diversion assembly comprises at least a fluid guide channel and at least a fluid diversion valve, the fluid diversion valve is set as a multi-way solenoid valve, and has at least two interfaces configured to communicate with the cooling fluid circulation pipelines, and at least one interface communicating with one end of the fluid guide channel, and the other end of the fluid guide channel is arranged in the box body in a manner of being capable of communicating with the accommodating space when the thermal runaway sensing element detects whether the battery pack is in the thermal runaway state.

2. The battery pack cooling system capable of preventing propagation of thermal runaway of a battery pack according to claim 1, wherein the fluid guide channel forms at least a liquid outlet, and is configured to communicate with the accommodating space.

3. The battery pack cooling system capable of preventing propagation of thermal runaway of a battery pack according to claim 2, wherein at least a spray head is arranged at the other end of the fluid guide channel, is configured to be accommodated in the accommodating space, and has fine and dense spray holes defined as the liquid outlets.

4. The battery pack cooling system capable of preventing propagation of thermal runaway of a battery pack according to claim 1, wherein the fluid guide channel is formed from a high-temperature meltable pipe body, is configured to be transversely arranged at a top of the box body that forms the accommodating space, and has one end communicating with one of the interfaces of the fluid diversion valve, and the other end blocked.

5. The battery pack cooling system capable of preventing propagation of thermal runaway of a battery pack according to claim 1, wherein the fluid guide channel has one end communicating with the fluid diversion valve, and the other end configured to communicate with at least a fluid filling space separated from the accommodating space and formed at a top of the box body.

6. The battery pack cooling system capable of preventing propagation of thermal runaway of a battery pack according to any one of claims 1 to 5, further comprising an alarm device, wherein the alarm device is communicatively connected to the thermal runaway sensing element.

7. A battery pack cooling system capable of preventing propagation of thermal runaway of a battery pack, comprising:
at least a battery pack, wherein the battery pack comprises a box body and at least a battery module, the box body forms an accommodating space, and the battery module is received in the accommodating space;
a controller;
at least a cooling fluid guide assembly, where the cooling fluid guide assembly includes a plurality of cooling fluid circulation pipelines and at least an electronic water pump, and the electronic water pump is communicatively connected to the controller and is arranged on the cooling fluid circulation pipelines;
at least a refrigeration element, where the refrigeration element communicates with the cooling fluid circulation pipelines, to cool the battery pack located in the accommodating space;
at least a heat exchange element, where the heat exchange element communicates with the cooling fluid circulation pipelines;
at least a thermal runaway sensing element, wherein the thermal runaway sensing element is configured to detect whether the battery pack located in the accommodating space is in a thermal runaway state, and is communicatively connected to the controller; and
at least a fluid diversion assembly, wherein the fluid diversion assembly comprises at least a fluid guide channel and at least a fluid diversion valve, the fluid diversion valve is set as a multi-way solenoid valve, and has at least two interfaces configured to communicate with the cooling fluid circulation pipelines, and at least one interface communicating with one end of the fluid guide channel, and the other end of the fluid guide channel is arranged in the box body in a manner of being capable of communicating with the accommodating space when the thermal runaway sensing element detects whether the battery pack is in the thermal runaway state.

8. The battery pack cooling system capable of preventing propagation of thermal runaway of a battery pack according to claim 7, wherein the fluid guide channel is formed from a high-temperature meltable pipe body, is transversely arranged at a top of the box body that forms the accommodating space, and has one end communicating with one of the interfaces of the fluid diversion valve, and the other end blocked.

9. The battery pack cooling system capable of preventing propagation of thermal runaway of a battery pack according to claim 7, wherein the fluid guide channel has one end communicating with the fluid diversion valve, and the other end communicating with at least a fluid filling space separated from the accommodating space and formed at a top of the box body.

10. A vehicle, comprising the battery pack cooling system capable of preventing propagation of thermal runaway of a battery pack according to any one of claims 1 to 9.
